# EUROPEAN PATENT APPLICATION

(11) **EP 4 287 457 A1**
(43) Date of publication of application: **06.12.2023**
(21) Application number: 23741956.9
(22) Date of filing: 06.01.2023
(51) Int. Cl.: H02J 50/10, H02J 7/00

(54) **WIRELESS CHARGING APPARATUS, ELECTRONIC DEVICE, AND ELECTRONIC DEVICE PROTECTION CASE**

(30) Priority: 22.04.2022 CN 202210427811
(71) Applicant: Honor Device Co., Ltd., Shenzhen, Guangdong 518040 (CN)
(72) Inventor: HUANG, Hua, Shenzhen, Guangdong 518040 (CN); ZHANG, Xialing, Shenzhen, Guangdong 518040 (CN)
(74) Representative: Gill Jennings & Every LLP
(86) International application number: PCT/CN2023/070873
(87) International publication number: WO 2023/202167

(57) **Abstract**

Provided are a wireless charging apparatus, an electronic device, and an electronic device protective casing. The wireless charging apparatus includes a wireless charging coil and a magnetic attraction structure for alignment during charging. The magnetic attraction structure includes an annular magnet located on peripheries of the wireless charging coil and a central magnet located at a center of the wireless charging coil, where the annular magnet is configured for attraction and alignment with a primary electronic device, the central magnet is configured for attraction and alignment with a secondary electronic device, and a magnetic attraction surface formed by the central magnet is configured to repel a corresponding magnetic attraction surface on the primary electronic device. The wireless charging apparatus, when provided with only a single charging coil, can perform magnetic attraction and alignment with both the primary electronic device such as a mobile phone and the secondary electronic device such as an accessory or a wearable device. Moreover, magnetic attraction and alignment between the secondary electronic device and the primary electronic device can also be achieved, thereby achieving the purpose of both charging of the secondary electronic device by the wireless charging apparatus and reverse charging thereof by the primary electronic device. Therefore, the magnetic attraction compatibility for wireless charging of different electronic devices is improved.

## Description

This application claims priority to Chinese Patent Application No. 202210427811.4, filed with the China National Intellectual Property Administration on April 22, 2022 and entitled "WIRELESS CHARGING APPARATUS, ELECTRONIC DEVICE, AND ELECTRONIC DEVICE PROTECTIVE CASING", which is incorporated herein by reference in its entirety.

### TECHNICAL FIELD

Embodiments of this application relate to the technical field of wireless charging, and in particular, to a wireless charging apparatus, an electronic device, and an electronic device protective casing.

### BACKGROUND

At present, there are significant differences in size and weight of magnetic attraction wireless charging apparatuses, mobile phones, and wearable devices. Mobile phones are relatively heavy (about 200 g) and require a relatively large attraction force, and in the industry, magnetic attraction is generally implemented therefor by placing a ring of magnets around a wireless charging coil. Wearable devices are relatively light (about 50 g) and require a relatively small attraction force, and in the industry, magnetic attraction is generally implemented therefor by placing one magnet in the center of a coil of each wearable device.

Since the capacities of batteries in mobile phones are relatively large, in some scenarios, consumers may also use the mobile phones to wirelessly charge wearable devices. However, there is a significant difference between the mobile phones and the wearable devices in arrangement of magnets. For a single-coil magnetic attraction wireless charging apparatus, magnetic poles of a mobile phone and the magnetic attraction wireless charging apparatus are designed in a mutual attraction manner, and have opposite polarities. Therefore, a wearable device either supports mobile phone magnetic attraction wireless charging, or supports base magnetic attraction wireless charging, which can be selected in alternative and cannot be selected together.

To achieve magnetic attraction wireless charging of a wearable device on both a wireless charging apparatus and a mobile phone, the magnetic attraction wireless charging apparatus may be designed in a dual-coil or multi-coil manner. In other words, two or more charging positions may be designed on one magnetic attraction wireless charging apparatus, with one charging position for wirelessly charging a mobile phone and the other charging position for charging a wearable device, and magnetic poles of the two charging positions are designed in an opposite manner. In this way, the wearable device can be compatible with the wireless charging apparatus and the mobile phone.

However, dual-coil or multi-coil magnetic attraction wireless charging apparatuses also have problems such as a large product volume, a heavy weight, a complex structure, and high manufacturing costs.

### SUMMARY

Embodiments of this application provide a wireless charging apparatus, to improve the magnetic attraction compatibility between a wireless charging apparatus, a primary electronic device, and a secondary electronic device during wireless charging.

The wireless charging apparatus provided in the embodiments of this application is provided with a wireless charging coil and a magnetic attraction structure for alignment during charging. The magnetic attraction structure is divided into an annular magnet located on peripheries of the wireless charging coil and a central magnet located at a center of the wireless charging coil. When charging the primary electronic device, the annular magnet is configured for attraction and alignment with the primary electronic device, and when charging the secondary electronic device, the central magnet is configured for attraction and alignment with the secondary electronic device. Moreover, a magnetic attraction surface formed by the central magnet is configured to repel a corresponding central magnet on the primary electronic device.

When the wireless charging apparatus charges the primary electronic device, the central magnet of the wireless charging apparatus and the corresponding magnetic attraction surface on the primary electronic device do not attract each other, but repel each other. Although the wireless charging apparatus and the corresponding magnetic attraction surface on the primary electronic device repel each other, a repulsion force is less than an attraction force by the annular magnet on the primary electronic device. Therefore, accurate alignment between the primary electronic device and the wireless charging apparatus is not affected, and both the central magnets of the primary electronic device and the wireless charging apparatus can be attracted and aligned with the secondary electronic device. Therefore, the wireless charging apparatus, when provided with only a single charging coil, can perform magnetic attraction and alignment with both the primary electronic device such as a mobile phone and the secondary electronic device such as an accessory or a wearable device. Moreover, magnetic attraction and alignment between the secondary electronic device and the primary electronic device can also be achieved, thereby achieving the purpose of both charging of the secondary electronic device by the wireless charging apparatus and reverse charging thereof by the primary electronic device. Therefore, the magnetic attraction compatibility for wireless charging of different electronic devices is improved.

Optionally, the central magnet is a combination type magnet, including a center-of-circle magnet and peripheral magnets, where on a cross-section along a diameter direction, magnetic pole directions of peripheral magnets located on both sides of the center-of-circle magnet are consistent with the diameter direction and polarities thereof are opposite to each other, and a magnetic pole direction of the center-of-circle magnet is perpendicular to the magnetic pole directions of the peripheral magnets on both sides; a polarity of one pole of the center-of-circle magnet is the same as those of two poles of the peripheral magnets on both sides and facing a center of circle, to form a magnetic field strengthened surface, and a polarity of the other pole of the center-of-circle magnet is opposite to those of the two poles of the peripheral magnets on both sides and facing the center of circle, to form a magnetic field weakened surface; and the magnetic field strengthened surface faces outward, and the magnetic field weakened surface faces inward.

By using the combination of magnets, the magnetic field strengthened surface and the magnetic field weakened surface can be formed. By enabling the magnetic field strengthened surface to face outward and the magnetic field weakened surface to face inward, not only a strong attraction force can be provided, so that the wireless charging apparatus can be accurately and reliably aligned with the primary electronic device, but also the magnetic field strengthened surface is enabled to be away from soft magnetic materials such as nanocrystals and ferrites inside, so that saturation of soft magnetic materials is not prone to being caused, and that the problem of soft magnetic materials being prone to saturation can be effectively solved.

Moreover, a magnetic flux density at the center of the coil is high, and an eddy current loss is also high. By designing the central magnet as a combination type magnet, compared with a complete annular magnet, a large eddy current circuit is cut off by using the combination type magnet, which is beneficial for reducing eddy current heating on the magnet and reducing the eddy current loss.

In addition, due to the fact that the combination of magnets can provide a strong attraction force and is not prone to causing saturation of soft magnetic materials, the volume of the magnets used can be appropriately reduced and further soft magnetic materials such as nanocrystals and ferrites can also be thinned while ensuring the attraction effect, which is conducive to design of a smaller and lighter wireless charging apparatus, and also to reduce interference with magnetic sensitive components, such as an electronic compass, a loudspeaker, and an MRAM, inside the electronic device.

Optionally, the annular magnet is a combination type magnet, including an inner ring magnet, a middle ring magnet, and an outer ring magnet, where on a cross-section along a radius direction, magnetic pole directions of the inner ring magnet and the outer ring magnet are consistent with the radius direction and polarities thereof are opposite to each other, and a magnetic pole direction of the middle ring magnet is perpendicular to the magnetic pole directions of the inner ring magnet and the outer ring magnet; a polarity of one pole of the middle ring magnet is the same as those of two opposite poles of the inner ring magnet and the outer ring magnet, to form a magnetic field strengthened surface, and a polarity of the other pole of the middle ring magnet is opposite to those of the two opposite poles of the inner ring magnet and the outer ring magnet, to form a magnetic field weakened surface; and the magnetic field strengthened surface faces outward, and the magnetic field weakened surface faces inward.

Such the combination of magnets that can form a magnetic field strengthened surface and a magnetic field weakened surface has a technical effect similar to that of the central magnet, which is the same below.

Optionally, the annular magnet is a combination type magnet, including an inner ring magnet and an outer ring magnet, where on a cross-section along a radius direction, a magnetic pole direction of the inner ring magnet is consistent with the radius direction, a magnetic pole direction of the outer ring magnet is perpendicular to the radius direction, and a polarity of the inner ring magnet away from a center of circle is the same as that of the outer ring magnet facing outward.

Optionally, the annular magnet is a combination type magnet, including an inner ring magnet, a middle ring magnet, and an outer ring magnet, where on a cross-section along a radius direction, magnetic pole directions of the inner ring magnet and the outer ring magnet are perpendicular to the radius direction and polarities thereof are opposite to each other, and a magnetic pole direction of the middle ring magnet is consistent with the radius direction; and a polarity of one pole of the middle ring magnet away from a center of circle is the same as that of a pole of the outer ring magnet facing outward, to form a magnetic field strengthened surface, and a polarity of the other pole of the middle ring magnet is the same as that of a pole of the inner ring magnet facing outward, to form a second magnetic field strengthened surface, and a polarity of the first magnetic field strengthened surface is opposite to that of the second magnetic field strengthened surface.

Optionally, a polarity of an equivalent magnetic pole of the central magnet facing outward is opposite to that of a pole of the inner ring magnet facing outward.

An electronic device provided in the embodiments of this application includes a wireless charging coil and a magnetic attraction structure for attraction and alignment during charging. The magnetic attraction structure includes an annular magnet located on peripheries of the wireless charging coil and a central magnet located at a center of the wireless charging coil; and the annular magnet is configured for attraction and alignment with the wireless charging apparatus, the central magnet is configured for attraction and alignment with a secondary electronic device capable of being charged reversely, and a magnetic attraction surface formed by the central magnet is configured to repel a corresponding magnetic attraction surface on the wireless charging apparatus.

When the electronic device is charged by the wireless charging apparatus, the central magnet of the electronic device and a corresponding magnetic attraction surface on the wireless charging apparatus do not attract each other, but repel each other. Although the electronic device and the corresponding magnetic attraction surface on the wireless charging apparatus repel each other, a repulsion force is less than an attraction force by the annular magnet on the wireless charging apparatus. Therefore, accurate alignment between the electronic device and the wireless charging apparatus is not affected, and both the central magnets of the electronic device and the wireless charging apparatus can be attracted and aligned with the secondary electronic device. Therefore, the purpose of both charging of the secondary electronic device by the wireless charging apparatus and reverse charging thereof by the primary electronic device is achieved. Therefore, the magnetic attraction compatibility for wireless charging of different electronic devices is improved.

Optionally, the central magnet is a combination type magnet, including a center-of-circle magnet and peripheral magnets, where on a cross-section along a diameter direction, magnetic pole directions of peripheral magnets located on both sides of the center-of-circle magnet are consistent with the diameter direction and polarities thereof are opposite to each other, and a magnetic pole direction of the center-of-circle magnet is perpendicular to the magnetic pole directions of the peripheral magnets on both sides; a polarity of one pole of the center-of-circle magnet is the same as those of two poles of the peripheral magnets on both sides and facing a center of circle, to form a magnetic field strengthened surface, and a polarity of the other pole of the center-of-circle magnet is opposite to those of the two poles of the peripheral magnets on both sides and facing the center of circle, to form a magnetic field weakened surface; and the magnetic field strengthened surface faces outward, and the magnetic field weakened surface faces inward.

By using the combination of magnets, the magnetic field strengthened surface and the magnetic field weakened surface can be formed. By enabling the magnetic field strengthened surface to face outward and the magnetic field weakened surface to face inward, not only a strong attraction force can be provided, so that the electronic device can be accurately and reliably aligned with the wireless charging apparatus, but also the magnetic field strengthened surface is enabled to be away from soft magnetic materials such as nanocrystals and ferrites inside, so that saturation of soft magnetic materials is not prone to being caused, and that the problem of soft magnetic materials being prone to saturation can be effectively solved.

Moreover, a magnetic flux density at the center of the coil is high, and an eddy current loss is also high. By designing the central magnet as a combination type magnet, compared with a complete annular magnet, a large eddy current circuit is cut off by using the combination type magnet, which is beneficial for reducing eddy current heating on the magnet and reducing the eddy current loss.

In addition, due to the fact that the combination of magnets can provide a strong attraction force and is not prone to causing saturation of soft magnetic materials, the volume of the magnets used can be appropriately reduced and further soft magnetic materials such as nanocrystals and ferrites can also be thinned while ensuring the attraction effect, which is conducive to design of a smaller and lighter electronic device, and also to reduce interference with magnetic sensitive components, such as an electronic compass, a loudspeaker, and an MRAM, inside the electronic device.

Optionally, the annular magnet is a combination type magnet, including an inner ring magnet, a middle ring magnet, and an outer ring magnet, where on a cross-section along a radius direction, magnetic pole directions of the inner ring magnet and the outer ring magnet are consistent with the radius direction and polarities thereof are opposite to each other, and a magnetic pole direction of the middle ring magnet is perpendicular to the magnetic pole directions of the inner ring magnet and the outer ring magnet; a polarity of one pole of the middle ring magnet is the same as those of two opposite poles of the inner ring magnet and the outer ring magnet, to form a magnetic field strengthened surface, and a polarity of the other pole of the middle ring magnet is opposite to those of the two opposite poles of the inner ring magnet and the outer ring magnet, to form a magnetic field weakened surface; and the magnetic field strengthened surface faces outward, and the magnetic field weakened surface faces inward.

Such the combination of magnets that can form a magnetic field strengthened surface and a magnetic field weakened surface has a technical effect similar to that of the central magnet, which is the same below.

Optionally, the annular magnet is a combination type magnet, including an inner ring magnet and an outer ring magnet, where on a cross-section along a radius direction, a magnetic pole direction of the inner ring magnet is consistent with the radius direction, a magnetic pole direction of the outer ring magnet is perpendicular to the radius direction, and a polarity of the inner ring magnet away from a center of circle is the same as that of the outer ring magnet facing outward.

Optionally, the annular magnet is a combination type magnet, including an inner ring magnet, a middle ring magnet, and an outer ring magnet, where on a cross-section along a radius direction, magnetic pole directions of the inner ring magnet and the outer ring magnet are perpendicular to the radius direction and polarities thereof are opposite to each other, and a magnetic pole direction of the middle ring magnet is consistent with the radius direction; and a polarity of one pole of the middle ring magnet away from a center of circle is the same as that of a pole of the outer ring magnet facing outward, to form a first magnetic field strengthened surface, and a polarity of the other pole of the middle ring magnet is the same as that of a pole of the inner ring magnet facing outward, to form a second magnetic field strengthened surface, and a polarity of the first magnetic field strengthened surface is opposite to that of the second magnetic field strengthened surface.

Optionally, a polarity of an equivalent magnetic pole of the central magnet facing outward is the same as that of a pole of the inner ring magnet facing outward.

An electronic device protective casing provided in the embodiments of this application is attached to an electronic device, and is provided with a magnetic attraction structure for attraction and alignment during charging of the electronic device. The magnetic attraction structure includes an annular magnet and a central magnet located at a center of the annular magnet; and the annular magnet is configured for attraction and alignment with the wireless charging apparatus, the central magnet is configured for attraction and alignment with a secondary electronic device capable of being charged reversely by the electronic device, and a magnetic attraction surface formed by the central magnet is configured to repel a corresponding magnetic attraction surface on the wireless charging apparatus.

Optionally, the central magnet is a combination type magnet, including a center-of-circle magnet and peripheral magnets, where on a cross-section along a diameter direction, magnetic pole directions of peripheral magnets located on both sides of the center-of-circle magnet are consistent with the diameter direction and polarities thereof are opposite to each other, and a magnetic pole direction of the center-of-circle magnet is perpendicular to the magnetic pole directions of the peripheral magnets on both sides; a polarity of one pole of the center-of-circle magnet is the same as those of two poles of the peripheral magnets on both sides and facing a center of circle, to form a magnetic field strengthened surface, and a polarity of the other pole of the center-of-circle magnet is opposite to those of the two poles of the peripheral magnets on both sides and facing the center of circle, to form a magnetic field weakened surface; and the magnetic field strengthened surface faces outward, and the magnetic field weakened surface faces inward.

Optionally, the annular magnet is a combination type magnet, including an inner ring magnet, a middle ring magnet, and an outer ring magnet, where on a cross-section along a radius direction, magnetic pole directions of the inner ring magnet and the outer ring magnet are consistent with the radius direction and polarities thereof are opposite to each other, and a magnetic pole direction of the middle ring magnet is perpendicular to the magnetic pole directions of the inner ring magnet and the outer ring magnet; a polarity of one pole of the middle ring magnet is the same as those of two opposite poles of the inner ring magnet and the outer ring magnet, to form a magnetic field strengthened surface, and a polarity of the other pole of the middle ring magnet is opposite to those of the two opposite poles of the inner ring magnet and the outer ring magnet, to form a magnetic field weakened surface; and the magnetic field strengthened surface faces outward, and the magnetic field weakened surface faces inward.

Optionally, the annular magnet is a combination type magnet, including an inner ring magnet and an outer ring magnet, where on a cross-section along a radius direction, a magnetic pole direction of the inner ring magnet is consistent with the radius direction, a magnetic pole direction of the outer ring magnet is perpendicular to the radius direction, and a polarity of the inner ring magnet away from a center of circle is the same as that of the outer ring magnet facing outward.

Optionally, the annular magnet is a combination type magnet, including an inner ring magnet, a middle ring magnet, and an outer ring magnet, where on a cross-section along a radius direction, magnetic pole directions of the inner ring magnet and the outer ring magnet are perpendicular to the radius direction and polarities thereof are opposite to each other, and a magnetic pole direction of the middle ring magnet is consistent with the radius direction; and a polarity of one pole of the middle ring magnet away from a center of circle is the same as that of a pole of the outer ring magnet facing outward, to form a first magnetic field strengthened surface, and a polarity of the other pole of the middle ring magnet is the same as that of a pole of the inner ring magnet facing outward, to form a second magnetic field strengthened surface, and a polarity of the first magnetic field strengthened surface is opposite to that of the second magnetic field strengthened surface.

Optionally, a polarity of an equivalent magnetic pole of the central magnet facing outward is the same as that of a pole of the inner ring magnet facing outward.

### BRIEF DESCRIPTION OF DRAWINGS

FIG. 1 is a schematic diagram of a magnetic attraction compatibility between a wireless charging base, a mobile phone, and a headphone casing according to an embodiment of this application;
FIG. 2 is a diagram of a magnetic attraction structure of the wireless charging base shown in FIG. 1;
FIG. 3 is a schematic diagram of a cross-section of the magnetic attraction structure shown in FIG. 2 in a diameter direction;
FIG. 4 is a schematic diagram of magnetic force line distribution in which a first central magnet shown in FIG. 3 forms a strong magnetic field on one side and a weakened magnetic field on the other side;
FIG. 5 is a schematic diagram of a structure of attraction and alignment between the wireless charging base and the mobile phone shown in FIG. 1;
FIG. 6 is a schematic diagram of alignment between magnets of the wireless charging base and the mobile phone shown in FIG. 5;
FIG. 7 is a schematic diagram of a structure of attraction and alignment between the wireless charging base and the headphone casing shown in FIG. 1;
FIG. 8 is a schematic diagram of alignment between magnets of the wireless charging base and the headphone casing shown in FIG. 7;
FIG. 9 is a schematic diagram of a structure of attraction and alignment between the headphone casing and the mobile phone shown in FIG. 1;
FIG. 10 is a schematic diagram of alignment between magnets of the headphone casing and the mobile phone shown in FIG. 9;
FIG. 11 is a schematic diagram of a cross-section of a magnetic attraction structure of another wireless charging base according to an embodiment of this application;
FIG. 12 is a schematic diagram of a cross-section of the magnetic attraction structure of still another wireless charging base according to an embodiment of this application;
FIG. 13 is a schematic diagram of a magnetic attraction structure of the mobile phone shown in FIG. 1;
FIG. 14 is a schematic diagram of a cross-section of the magnetic attraction structure shown in FIG. 13 in a diameter direction;
FIG. 15 is a schematic diagram of alignment between the magnetic attraction structure of the mobile phone shown in FIG. 14 and the magnetic attraction structure of the wireless charging base shown in FIG. 3;
FIG. 16 is a schematic diagram of alignment between the magnetic attraction structure of the mobile phone shown in FIG. 14 after an annular magnet is simplified and the magnetic attraction structure of the wireless charging base shown in FIG. 3;
FIG. 17 is a schematic diagram of alignment between the magnetic attraction structure of the mobile phone shown in FIG. 14 after a central magnet is simplified and the magnetic attraction structure of the wireless charging base shown in FIG. 3;
FIG. 18 is a schematic diagram of a cross-section of a magnetic attraction structure of another mobile phone according to an embodiment of this application;
FIG. 19 is a schematic diagram of alignment between the magnetic attraction structure of the mobile phone shown in FIG. 18 and the magnetic attraction structure of the wireless charging base shown in FIG. 11;
FIG. 20 is a schematic diagram of magnetic flux distribution of a first annular magnet and a second annular magnet shown in FIG. 19;
FIG. 21 is a schematic diagram of a cross-section of a magnetic attraction structure of still another mobile phone according to an embodiment of this application;
FIG. 22 is a schematic diagram of alignment between the magnetic attraction structure of the mobile phone shown in FIG. 21 and the magnetic attraction structure of the wireless charging base shown in FIG. 12;
FIG. 23 is a schematic diagram of a magnetic attraction structure of the headphone casing shown in FIG. 1;
FIG. 24 is a schematic diagram of a cross-section of the magnetic attraction structure shown in FIG. 23 in a diameter direction; and
FIG. 25 is a schematic diagram of a structure of the mobile phone after a protective casing is additionally added.

### Descriptions of reference numerals:

1. Wireless charging base; 2. Mobile phone; 3. Headphone casing; 10. Wireless charging coil; 11. First central magnet; 111. First center-of-circle magnet; 112. First peripheral magnet; 12. First annular magnet; 121. First inner ring magnet; 122. First middle ring magnet; 123. First outer ring magnet; 20. Wireless charging coil; 21. Second central magnet; 211. Second center-of-circle magnet; 212. Second peripheral magnet; 22. Second annular magnet; 221. Second inner ring magnet; 222. Second middle ring magnet; 223. Second outer ring magnet; 31. Third center-of-circle magnet; 32. Third peripheral magnet; and 4. Protective casing.

### DESCRIPTION OF EMBODIMENTS

To enable those skilled in the art to better understand solutions of this application, the following further describes this application in detail with reference to the accompanying drawings and the specific implementations.

In the descriptions of the embodiments of this application, "/" means "or" unless otherwise specified. For example, A/B may represent A or B. The term "and/or" used herein describes only an association relationship for describing associated objects and represents that three relationships may exist. For example, A and/or B may represent the following three casings: only A exists, both A and B exist, and only B exists.

Herein, the terms "up, down, inside, and outside" are established based on a positional relationship shown in the accompanying drawings. According to the different accompanying drawings, the corresponding positional relationship may also change accordingly. Therefore, these terms cannot be understood as an absolute limitation on the protection scope. Besides, relational terms such as "first" and "second" are only used to distinguish one component from another component with the same name. It is not necessarily required or implied that there is any such actual relationship or order between these components.

A wireless charging apparatus in this application may be a wireless charging base, a mobile power supply, a vehicle-mounted support, or the like. A primary electronic device refers to an electronic device capable of being charged by the wireless charging apparatus and also capable of reversely charging another electronic device, for example, a mobile phone, a PAD, a laptop, or the like. A secondary electronic device refers to an accessory or a wearable device capable of being charged by the wireless charging apparatus and also capable of being charged by the primary electronic device, for example, a headphone, a headphone casing, a watch, a bracelet, glasses, a vehicle key, or the like.

The following mainly provide a detailed description of this application by an example in which a wireless charging base, a mobile phone, and a headphone casing are used.

In conventional design, when the wireless charging base can attract the mobile phone and the headphone casing separately for wireless charging, the headphone casing and the mobile phone cannot attract each other. When the wireless charging base can attract the mobile phone for charging and the mobile phone can attract the headphone casing for charging, the wireless charging base cannot attract the headphone casing for charging. Neither of the forms can enable the wireless charging base, the mobile phone, and the headphone casing to be fully compatible with each other, resulting in a poor user experience for consumers.

In addition, to ensure stable attraction and non-loosening of the mobile phone and the wireless charging base, a relatively thick magnet is needed to ensure an attraction force. Moreover, alternating magnetic fields are used for wireless charging, to achieve energy transfer between the wireless charging base and the mobile phone, and the energy transfer is mainly implemented by using a coil module, which generally includes coils and a soft magnetic material (nanocrystals, non-crystals, ferrites, or the like). A magnetic permeability of the soft magnetic material is much higher than that of air, and therefore can greatly improve the coupling coefficient and the energy transfer efficiency. However, a magnet is a permanent magnet, which establishes a magnetic field itself. For the soft magnetic material within a range of the magnetic field, saturation thereof is caused, resulting in a decrease in the magnetic permeability, which is manifested by a decrease in coil inductance, and causing a decrease in the coupling coefficient and the efficiency of the system (the magnet of the mobile phone is relatively thin for the purpose of lightness and thinness thereof, and the main cause of the saturation of the soft magnetic material in the mobile phone is the magnetic field of the magnet of the wireless charging base). Moreover, metals around the wireless charging base are also prone to generating an eddy current due to alternating magnetic fields, resulting in heat generation and posing a safety risk.

To reduce the impact of magnets on the magnetic saturation of the soft magnetic material, generally the thickness of the soft magnetic material is added to avoid the problem of the magnetic saturation for the mobile phone. However, thickening of the soft magnetic material further leads to the problem that the mobile phone becomes thicker and heavier, which sacrifice the portability of the mobile phone.

For the above technical problems, this application aims at improving the magnetic attraction compatibility between the wireless charging base, the mobile phone, and the headphone casing during wireless charging by improving the magnetic attraction structure. Further, the impact of a magnetic field of the magnetic attraction structure on the soft magnetic material is reduced as much as possible while ensuring the magnetic attraction effect, so that lightness and thinness design of the wireless charging base, the mobile phone, and the headphone casing can be achieved.

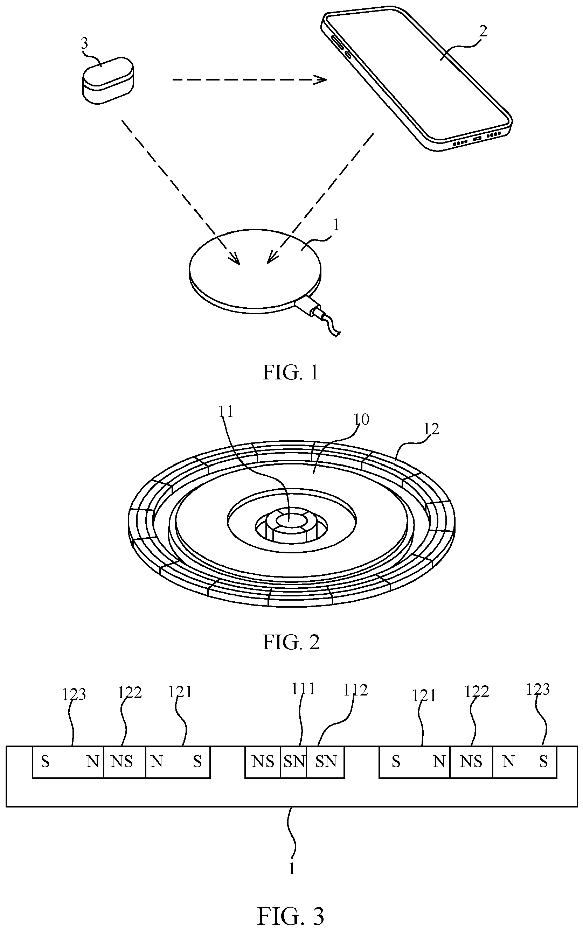

Referring to FIG. 1, FIG. 2, and FIG. 3, FIG. 1 is a schematic diagram of a magnetic attraction compatibility between a wireless charging base, a mobile phone, and a headphone casing according to an embodiment of this application; FIG. 2 is a diagram of a magnetic attraction structure of the wireless charging base shown in FIG. 1; and FIG. 3 is a schematic diagram of a cross-section of the magnetic attraction structure shown in FIG. 2 in a diameter direction.

A wireless charging base 1 provided in this embodiment is configured to wirelessly charge a mobile phone 2 and a headphone casing 3, and the mobile phone 2 can reversely and wirelessly charge the headphone casing 3. To accurately perform alignment to ensure the charging effect during wireless charging, the wireless charging base 1, the mobile phone 2, and the headphone casing 3 are respectively provided with magnetic attraction structures, for positioning depending on mutual attraction by magnetic forces of magnets.

A wireless charging coil 10 is disposed inside the wireless charging base 1, and a magnetic attraction structure thereof is divided into a first central magnet 11 and a first annular magnet 12. The first central magnet 11 is located in a center of the wireless charging coil 10, and the first annular magnet 12 is located on peripheries of the wireless charging coil 10.

Specifically, the first central magnet 11 is a combination type magnet, mainly composed of a first center-of-circle magnet 111 and a plurality of first peripheral magnets 112. On a cross-section along a diameter direction, magnetic pole directions of first peripheral magnets 112 located on both sides of the first center-of-circle magnet 111 are consistent with the diameter direction and polarities thereof are opposite to each other, an end thereof pointing towards the center being an S pole, and an end away from the center of circle being an N pole, and a magnetic pole direction of the first center-of-circle magnet 111 is perpendicular to the magnetic pole directions of the first peripheral magnets 112 on both sides.

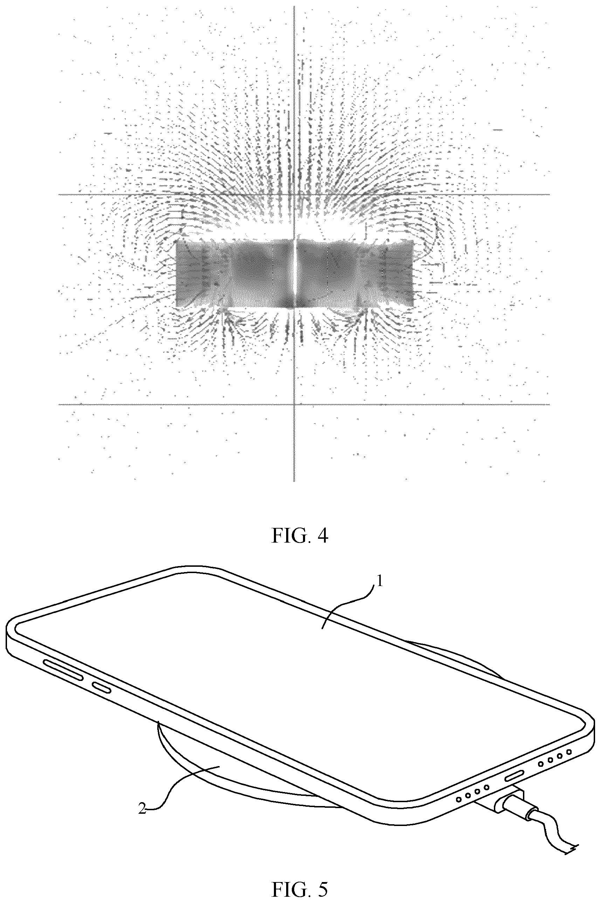

Further referring to FIG. 4, FIG. 4 is a schematic diagram of magnetic force line distribution in which a first central magnet shown in FIG. 3 forms a strong magnetic field on one side and a weakened magnetic field on the other side.

One end of the first center-of-circle magnet 111 is an S pole, which has a polarity the same as those of two poles of the first peripheral magnets 112 on both sides and facing the center of circle, and therefore a magnetic field strengthened surface can be formed. The other end of the first center-of-circle magnet 111 is an N pole, which has a polarity opposite to those of the two poles of the first peripheral magnets 112 on both sides and facing the center of circle, and therefore a magnetic field weakened surface can be formed. The magnetic field strengthened surface faces the outside of the wireless charging base 1, and the magnetic field weakened surface faces the inside of the wireless charging base 1.

By using the combination of magnets, the magnetic field strengthened surface and the magnetic field weakened surface can be formed. By enabling the magnetic field strengthened surface to face outward and the magnetic field weakened surface to face inward, not only a strong attraction force can be provided, so that the wireless charging base 1 can be accurately and reliably aligned with the mobile phone 2, but also the magnetic field strengthened surface is enabled to be away from soft magnetic materials such as nanocrystals and ferrites inside, so that saturation of soft magnetic materials is not prone to being caused, and that the problem of soft magnetic materials being prone to saturation can be effectively solved, thereby achieving high-power wireless charging.

Moreover, a magnetic flux density at the center of the coil is high, and an eddy current loss is also high. By designing the first central magnet 11 as a combination type magnet, compared with a complete annular magnet, a large eddy current circuit is cut off by using the combination type magnet, which is beneficial for reducing eddy current heating on the magnet and reducing the eddy current loss.

In addition, due to the fact that the combination of magnets can provide a strong attraction force and is not prone to causing saturation of soft magnetic materials, the volume of the magnets used can be appropriately reduced and further soft magnetic materials such as nanocrystals and ferrites can also be thinned while ensuring the attraction effect, which is conducive to design of a smaller and lighter wireless charging base, and also to reduce interference with magnetic sensitive components, such as an electronic compass, a loudspeaker, and an MRAM, inside the mobile phone 2.

Still referring to FIG. 2 and FIG. 3, the first annular magnet 12 is a combination type magnet, mainly composed of a first inner ring magnet 121, a first middle ring magnet 122, and a first outer ring magnet 123. Each ring of magnets is composed of a plurality of split magnets arranged and distributed along an annular direction. On a cross-section along a radius direction, magnetic pole directions of the first inner ring magnet 121 and the first outer ring magnet 123 are consistent with the radius direction and polarities thereof are opposite to each other, an end at which the two face each other being the N pole, and an end at which the two are away from each other being the S pole, and a magnetic pole direction of the first middle ring magnet 122 is perpendicular to the magnetic pole directions of the first inner ring magnet 121 and the first outer ring magnet 123. One end of the first middle ring magnet 122 is the N pole, having a polarity the same as those of two poles of the first inner ring magnet 121 and the first outer ring magnet 123, to form a magnetic field strengthened surface; and the other end of the first middle ring magnet 122 is the S pole, having a polarity opposite to those of two poles of the first inner ring magnet 121 and the first outer ring magnet 123, to form a magnetic field weakened surface. The magnetic field strengthened surface faces the outside of the wireless charging base 1, and the magnetic field weakened surface faces the inside of the wireless charging base 1.

The first annular magnet 12, after using the combination of magnets that can form a magnetic field strengthened surface and a magnetic field weakened surface, has a technical effect similar to that of the first central magnet 11, namely, not prone to causing saturation of the soft magnetic material, reducing eddy current heating, reducing interference on magnetic sensitive components, and facilitating lightness and thinness design, which is the same below.

Referring to FIG. 5 to FIG. 10, FIG. 5 is a schematic diagram of a structure of attraction and alignment between the wireless charging base and the mobile phone shown in FIG. 1;

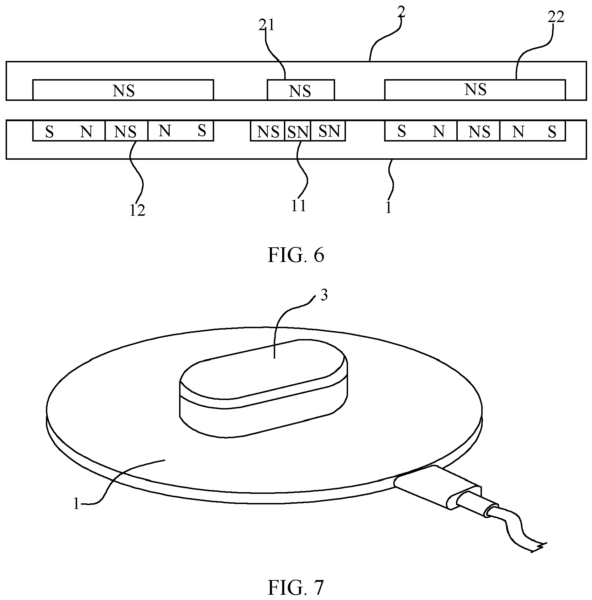

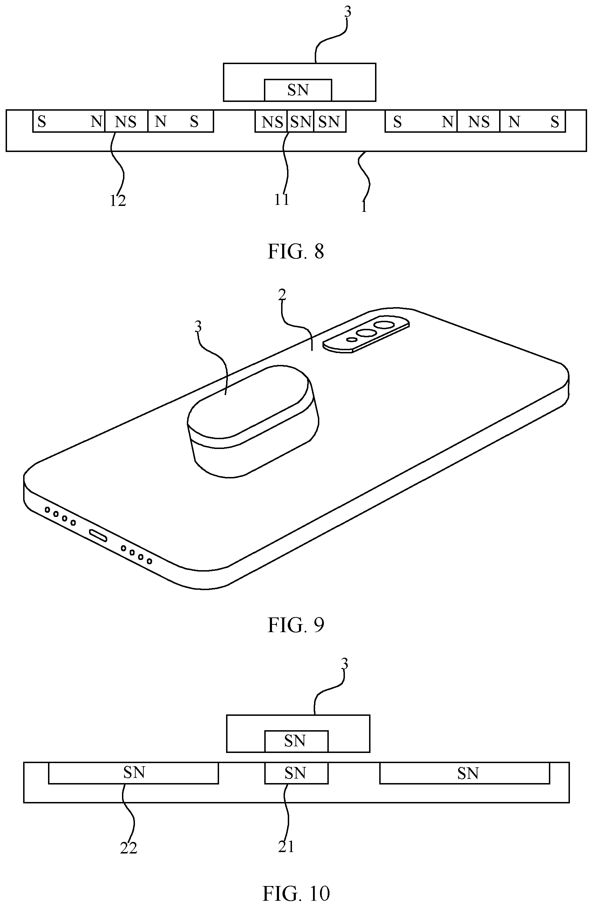

FIG. 6 is a schematic diagram of alignment between magnets of the wireless charging base and the mobile phone shown in FIG. 5; FIG. 7 is a schematic diagram of a structure of attraction and alignment between the wireless charging base and the headphone casing shown in FIG. 1; FIG. 8 is a schematic diagram of alignment between magnets of the wireless charging base and the headphone casing shown in FIG. 7; FIG. 9 is a schematic diagram of a structure of attraction and alignment between the headphone casing and the mobile phone shown in FIG. 1; FIG. 10 is a schematic diagram of alignment between magnets of the headphone casing and the mobile phone shown in FIG. 9.

The mobile phone 2 is mainly composed of a magnetic attraction structure inside the second central magnet 21 and a second annular magnet 22. The second central magnet 21 corresponds to a first central magnet of the wireless charging base 1, and a pole, of the second central magnet 21, facing outward is the S pole. The second annular magnet 22 corresponds to a second annular magnet 22 of the wireless charging base 1, and a pole, of the second annular magnet 22, facing outward is the S pole. A pole, of an attraction magnet at a bottom portion of the headphone casing 3, facing outward is the N pole.

When using the wireless charging base 1 to charge the mobile phone 2 or the headphone casing 3, the mobile phone 2 is placed on an upper surface of wireless charging base 1 with the screen facing upward and the back side facing downward. The headphone casing 3 may be directly placed on the upper surface of wireless charging base 1. When using the mobile phone 2 to reversely charge the headphone casing 3, the mobile phone 2 is flipped over by 180 degrees and placed with the back side facing upward, and the headphone casing 3 is stacked on the back of the mobile phone 2, so that the second central magnet 21 of the mobile phone 2 is attracted to an attraction magnet of headphone casing 3, to align the headphone casing 3 with the mobile phone 2.

The first central magnet 11 and the second central magnet 21 on the mobile phone 2 do not attract each other, but repel each other. Although the first central magnet 11 and the second central magnet 21 repel each other, a repulsion force is less than an attraction force between the first annular magnet 12 and the second annular magnet 22. Therefore, accurate alignment between the mobile phone 2 and the wireless charging base 1 is not affected, and both the central magnets of the mobile phone 2 and the wireless charging base 1 can be attracted and aligned with the headphone casing 3. Therefore, the wireless charging base 1, when provided with only a single charging coil, can perform magnetic attraction and alignment with both the mobile phone 2 (see FIG. 5) and the headphone casing 3 (see FIG. 7). Moreover, the headphone casing 3 can also achieve magnetic attraction and alignment with the mobile phone 2 (see FIG. 9), thereby achieving the purpose of both charging of the headphone casing 3 by the wireless charging base and reverse charging thereof by the mobile phone 2. Therefore, the magnetic attraction compatibility for wireless charging of different electronic devices is improved.

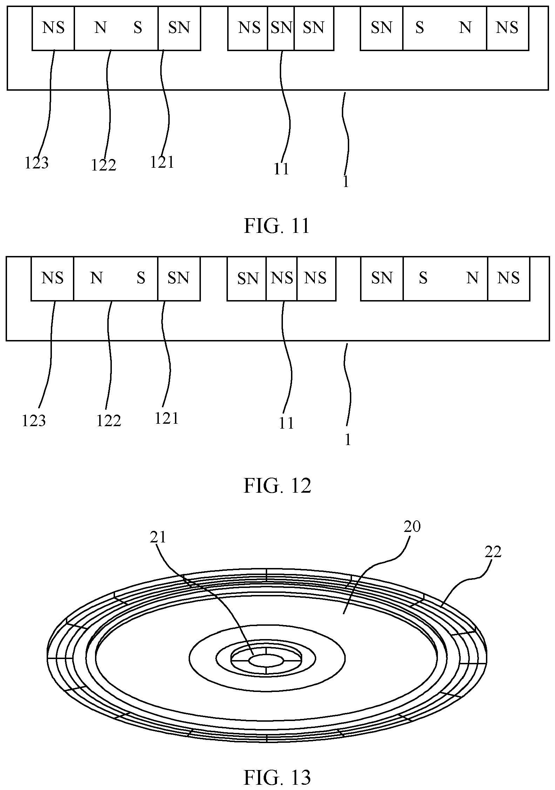

Referring to FIG. 11, FIG. 11 is a schematic diagram of a cross-section of a magnetic attraction structure of another wireless charging base according to an embodiment of this application.

In another embodiment, arrangement of the first central magnet 11 of the wireless charging base 1 is the same as that of the foregoing embodiments, with the difference in that, the arrangement of the first annular magnet 12 of the wireless charging base 1 is changed.

Specifically, the first annular magnet 12 of the wireless charging base 1 is a combination type magnet, mainly composed of a first inner ring magnet 121, a first middle ring magnet 122, and a first outer ring magnet 123. On a cross-section along a radius direction, magnetic pole directions of the first inner ring magnet 121 and the first outer ring magnet 123 are perpendicular to the radius direction and polarities thereof are opposite to each other, a pole, of the first inner ring magnet 121, facing outward is the S pole, and a pole, of the first outer ring magnet 123, facing outward is the N pole; and a magnetic pole direction of the first middle ring magnet 122 is consistent with the radius direction, one pole away from a center of circle thereof is the N pole and has a polarity the same as that of a pole, of the first outer ring magnet 123, facing outward, to form a first magnetic field strengthened surface, the other pole of the first middle ring magnet 122 is the S pole and has a polarity the same as that of the pole, of the first inner ring magnet 122, facing outward, to form a second magnetic field strengthened surface, and a polarity of the first magnetic field strengthened surface is opposite to that of the second magnetic field strengthened surface.

Such the arrangement of magnets can generate a strong attraction force, by which the thickness of the magnets of the wireless charging base 1 can be further reduced while achieving the same attraction force. In addition, the magnetic field strength on the mobile phone side can also be reduced while reducing the thickness of wireless charging base 1, and on this basis, a thinner soft magnetic material can be used in the mobile phone 2, thereby further reducing the thickness and the weight of the mobile phone 2.

Referring to FIG. 12, FIG. 12 is a schematic diagram of a cross-section of a magnetic attraction structure of another wireless charging base according to an embodiment of this application.

In another embodiment, based on the embodiment shown in FIG. 11, the first central magnet 11 of the wireless charging base 1 can be disposed in reverse. After being disposed in reverse, the magnetic field strengthened surface facing the outside of the first central magnet 11 of the wireless charging base 1 becomes the N pole.

In such the arrangement of magnets, an equivalent magnetic pole of the first central magnet 11 of the wireless charging base 1 facing outward is opposite to an equivalent magnetic pole of the first inner ring magnet 121 facing outward, and therefore the magnetic flux can be further reduced, thereby reducing interference on the magnetic sensitive components inside the electronic device.

It should be noted herein that, when the wireless charging base 1 adopts the structure shown in FIG. 12, to maintain mutual repulsion with the second central magnet 21 of the mobile phone 2, the second central magnet 21 of the mobile phone 2 is also disposed in reverse, and the pole facing outward is correspondingly adjusted to the N pole. In addition, the attraction magnet of the headphone casing 3 is also disposed in reverse, and a pole thereof facing outward becomes the S pole. In this way, the wireless charging base 1, the mobile phone 2, and the headphone casing 3 can still be compatible with each other.

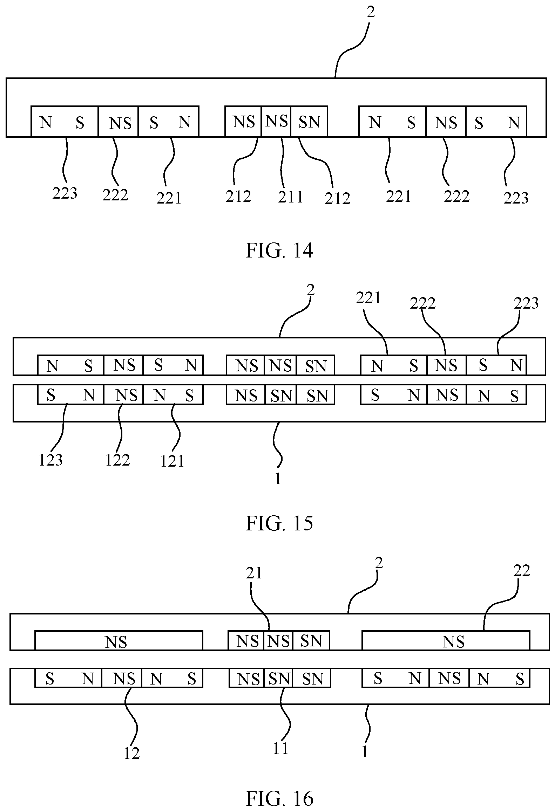

Referring to FIG. 13, FIG. 14, and FIG, 15, FIG. 13 is a schematic diagram of a magnetic attraction structure of the mobile phone shown in FIG. 1; FIG. 14 is a schematic diagram of a cross-section of the magnetic attraction structure shown in FIG. 13 in a diameter direction; and FIG. 15 is a schematic diagram of alignment between the magnetic attraction structure of the mobile phone shown in FIG. 14 and the magnetic attraction structure of the wireless charging base shown in FIG. 3.

The electronic device provided in this embodiment is a mobile phone 2. A wireless charging coil 20 is disposed inside the mobile phone 2, and a magnetic attraction structure thereof is mainly composed of a second central magnet 21 and a second annular magnet 22. The second central magnet 21 is located in a center of the wireless charging coil 20, and the second annular magnet 22 is located on peripheries of the wireless charging coil 20.

Similar to the first central magnet 11 of the wireless charging base 1, the second central magnet 21 is also a combination type magnet, mainly composed of a second center-of-circle magnet 211 and a second peripheral magnet 212. On a cross-section along a diameter direction, magnetic pole directions of the second peripheral magnet 212 located on both sides of the second center-of-circle magnet 211 are consistent with the diameter direction and polarities thereof are opposite to each other, an end thereof pointing towards the center of circle is the S pole, an end away from the center of circle is the N pole, and a magnetic pole direction of the second center-of-circle magnet 211 is perpendicular to the magnetic pole directions of the second peripheral magnet 212 on both sides. One end of the second center-of-circle magnet 211 is the S pole, which has a polarity the same as those of the two poles of the second peripheral magnet 212 on both sides and facing the center of circle, and therefore a magnetic field strengthened surface can be formed. The other end of the second center-of-circle magnet 211 is the N pole, which has a polarity opposite to those of the two poles of the second peripheral magnet 212 on both sides and facing the center of circle, and therefore a magnetic field weakened surface can be formed. The magnetic field strengthened surface faces the outside of the mobile phone 2, and the magnetic field weakened surface faces the inside of the mobile phone 2.

By using the combination of magnets, the magnetic field strengthened surface and the magnetic field weakened surface can be formed. By enabling the magnetic field strengthened surface to face outward and the magnetic field weakened surface to face inward, not only a strong attraction force can be provided, so that the wireless charging base 1 can be accurately and reliably aligned with the mobile phone 2, but also the magnetic field strengthened surface is enabled to be away from soft magnetic materials such as nanocrystals and ferrites inside, so that saturation of soft magnetic materials is not prone to being caused, and that the problem of soft magnetic materials being prone to saturation can be effectively solved.

Moreover, a magnetic flux density at the center of the coil is high, and an eddy current loss is also high. By designing the second central magnet 21 as a combination type magnet, compared with a complete annular magnet, a large eddy current circuit is cut off by using the combination type magnet, which is beneficial for reducing eddy current heating on the magnet and reducing the eddy current loss.

In addition, due to the fact that the combination of magnets can provide a strong attraction force and is not prone to causing saturation of soft magnetic materials, the volume of the magnets used can be appropriately reduced and further soft magnetic materials such as nanocrystals and ferrites can also be thinned while ensuring the attraction effect, which is conducive to design of a smaller and lighter mobile phone 2, and also to reduce interference with magnetic sensitive components, such as an electronic compass, a loudspeaker, and an MRAM, inside the mobile phone 2.

Similar to the first annular magnet 12, the second annular magnet 22 is also a combination type magnet, mainly composed of a second inner ring magnet 221, a second middle ring magnet 222, and a second outer ring magnet 223. Each ring of magnets is composed of a plurality of split magnets arranged and distributed along an annular direction. On a cross-section along a radius direction, magnetic pole directions of the second inner ring magnet 221 and the second outer ring magnet 223 are consistent with the radius direction and polarities thereof are opposite to each other, an end at which the two face each other being the S pole, and an end at which the two are away from each other being the N pole, and a magnetic pole direction of the second middle ring magnet 222 is perpendicular to the magnetic pole directions of the second inner ring magnet 221 and the second outer ring magnet 223. One end of the second middle ring magnet 222 is the S pole, having a polarity the same as those of two poles of the second inner ring magnet 221 and the second outer ring magnet 223, to form a magnetic field strengthened surface; and the other end of the second middle ring magnet 222 is the N pole, having a polarity opposite to those of two poles of the second inner ring magnet 221 and the second outer ring magnet 223, to form a magnetic field weakened surface. The magnetic field strengthened surface faces the outside of the mobile phone 2, and the magnetic field weakened surface faces the inside of the mobile phone 2.

The combination of magnets that can form a magnetic field strengthened surface and a magnetic field weakened surface has a technical effect similar to that of the second central magnet 21, namely, not prone to causing saturation of the soft magnetic material, reducing eddy current heating, reducing interference on magnetic sensitive components, and facilitating lightness and thinness design, which is the same below.

Further referring to FIG. 16, FIG. 16 is a schematic diagram of alignment between the magnetic attraction structure of the mobile phone shown in FIG. 14 after an annular magnet is simplified and the magnetic attraction structure of the wireless charging base shown in FIG. 3.

In this embodiment, based on this embodiment shown in FIG. 14, the second annular magnet 22 of the mobile phone 2 is changed to a magnet having a single magnetic pole direction, a magnetic pole direction being perpendicular to a magnetic attraction surface. A magnetic pole facing outward is the S pole, and the magnetic pole facing inward is the N pole. The second annular magnet 22 may be either an integrated annular magnet or an annular magnet composed of a plurality of segmented magnets spliced together.

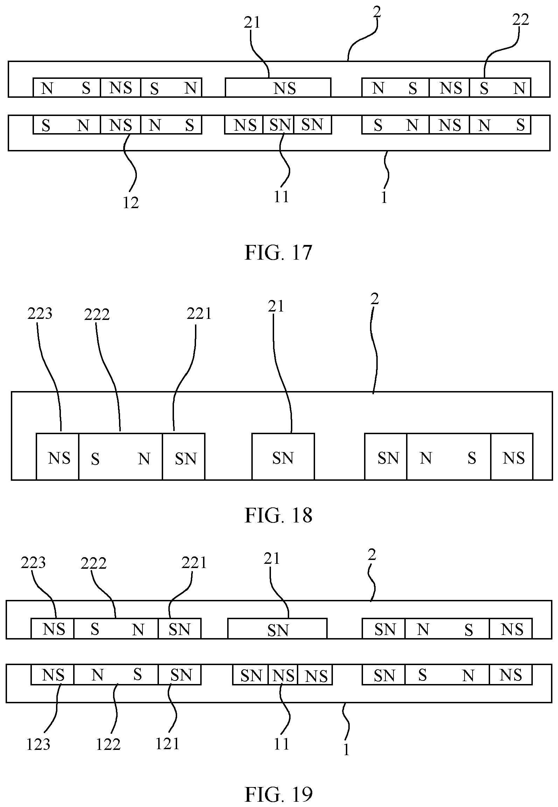

Further referring to FIG. 17, FIG. 17 is a schematic diagram of alignment between the magnetic attraction structure of the mobile phone shown in FIG. 14 after a central magnet is simplified and the magnetic attraction structure of the wireless charging base shown in FIG. 3.

In this embodiment, based on this embodiment shown in FIG. 14, the second central magnet 21 of the mobile phone 2 is changed to a magnet having a single magnetic pole direction, a magnetic pole direction being perpendicular to a magnetic attraction surface. A magnetic pole facing outward is the S pole, and the magnetic pole facing inward is the N pole. The second annular magnet 22 may be either an integrated magnet or a magnet composed of a plurality of segmented magnets spliced together.

Compared with this embodiment shown in FIG. 14, in this embodiment shown in FIG. 16 and FIG. 17, only the second central magnet 21 or the second annular magnet 22 adopts a combination type of magnets that can form a magnetic field strengthened surface and a magnetic field weakened surface, and therefore, the structure can be further simplified while taking into account the foregoing technical effects, which helps to reduce the number of components, the assembly difficulty, and the manufacturing cost.

Referring to FIG. 18, FIG. 18 is a schematic diagram of a cross-section of a magnetic attraction structure of another mobile phone according to an embodiment of this application.

In this embodiment, the second central magnet 21 of the mobile phone 2 is a magnet having a single magnetic pole direction, and the second annular magnet 22 of the mobile phone 2 is a combination type magnet, mainly composed of a second inner ring magnet 221, a second middle ring magnet 222, and a second outer ring magnet 223. On a cross-section along a radius direction, magnetic pole directions of the second inner ring magnet 221 and the second outer ring magnet 222 are perpendicular to the radius direction and polarities thereof are opposite to each other, and a magnetic pole direction of the second middle ring magnet 222 is consistent with the radius direction. One pole of the second middle ring magnet 222 away from a center of circle thereof is the S pole and has a polarity the same as that of a pole, of the second outer ring magnet 223, facing outward, to form a first magnetic field strengthened surface, the other pole of the second middle ring magnet 222 is the N pole and has a polarity the same as that of the pole, of the second inner ring magnet 221, facing outward, to form a second magnetic field strengthened surface.

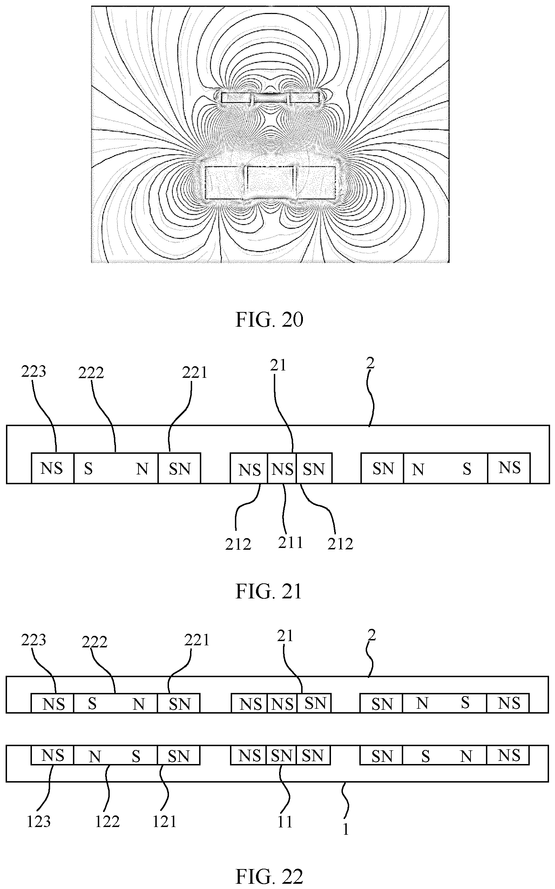

The magnetic attraction structure of the mobile phone 2 is suitable for magnetic attraction and alignment with the wireless charging base 1 shown in FIG. 12 (see FIG. 19). During charging, the first magnetic field strengthened surface of the mobile phone 2 is aligned with the first magnetic field strengthened surface of the wireless charging base 1, and the second magnetic field strengthened surface of the mobile phone 2 is aligned with the second magnetic field strengthened surface of the wireless charging base 1. The magnetic flux distribution is shown in FIG. 20.

Such the arrangement of magnet plates can generate a strong attraction force, by which the thickness of the magnets of the mobile phone 2 can be further reduced while achieving the same attraction force, thereby further reducing the thickness and the weight of the mobile phone 2.

Referring to FIG. 21, FIG. 21 is a schematic diagram of a cross-section of a magnetic attraction structure of still another mobile phone according to an embodiment of this application.

In this embodiment, based on this embodiment shown in FIG. 18, the second central magnet 21 of the mobile phone 2 is a combination type magnet, mainly composed of a second center-of-circle magnet 211 and a second peripheral magnet 212. On a cross-section along a diameter direction, magnetic pole directions of the second peripheral magnet 212 located on both sides of the second center-of-circle magnet 211 are consistent with the diameter direction and polarities thereof are opposite to each other, an end thereof pointing towards the center of circle being the S pole, and an end away from the center of circle being the N pole, and a magnetic pole direction of the second center-of-circle magnet 211 is perpendicular to the magnetic pole directions of the second peripheral magnet 212 on both sides. One end of the second center-of-circle magnet 211 is the S pole, which has a polarity the same as those of the two poles of the second peripheral magnet 212 on both sides and facing the center of circle, and therefore a magnetic field strengthened surface can be formed. The other end of the second center-of-circle magnet 211 is the N pole, which has a polarity opposite to those of the two poles of the second peripheral magnet 212 on both sides and facing the center of circle, and therefore a magnetic field weakened surface can be formed. The magnetic field strengthened surface faces the outside of the mobile phone 2, and the magnetic field weakened surface faces the inside of the mobile phone 2.

The magnetic attraction structure of the mobile phone 2 is suitable for magnetic attraction and alignment with the wireless charging base 1 shown in FIG. 11 (see FIG. 22), an equivalent magnetic pole of the second central magnet 21 facing outward is opposite to an equivalent magnetic pole of the second inner ring magnet 221 facing outward, and therefore the magnetic flux can be further reduced, thereby reducing interference on the magnetic sensitive components inside the electronic device.

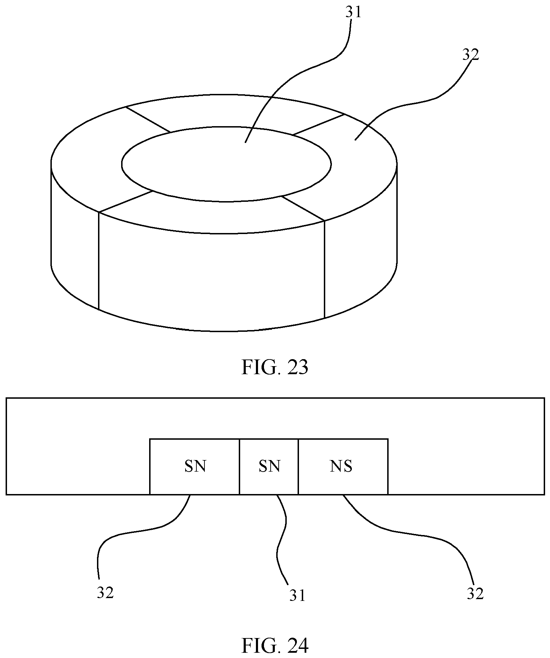

Referring to FIG. 23 and FIG. 24, FIG. 23 is a schematic diagram of a magnetic attraction structure of the headphone casing shown in FIG. 1; and FIG. 24 is a schematic diagram of a cross-section of the magnetic attraction structure shown in FIG. 23 in a diameter direction.

This embodiment provides a headphone casing 3, which is provided with an attraction magnet at a bottom portion of the headphone casing 3, for wireless charging through attraction. The attraction magnet is a combination type magnet. Similar to the first central magnet 11, the combination type magnet is mainly composed of a third center-of-circle magnet 31 and third peripheral magnets 32. On a cross-section along a diameter direction, magnetic pole directions of the third peripheral magnets 32 located on both sides of the third center-of-circle magnet 31 are consistent with the diameter direction and polarities thereof are opposite to each other, an end thereof pointing towards the center being the N pole, and an end away from the center being the S pole, and a magnetic pole direction of the third center-of-circle magnet 31 is perpendicular to the magnetic pole directions of the third peripheral magnets 32 on both sides. One end of the third center-of-circle magnet 31 is the N pole, which has the same polarity as the two poles of the third peripheral magnet 32 facing the center of circle on both sides to form a magnetic field strengthened surface. The other end of the third center-of-circle magnet 31 is the S pole, which is opposite to the two poles of the third peripheral magnet 32 facing the center of circle on both sides to form a magnetic field weakened surface. The magnetic field strengthened surface faces the outside of headphone casing 3, and the magnetic field weakened surface faces the inside of the headphone casing 3.

An attraction magnet of headphone casing 3 adopts the foregoing magnet array, which can also increase the magnetic attraction. While ensuring an equal magnetic force, thinner magnets can be configured for attraction, so that a secondary electronic device such as the headphone casing 3 can be designed lighter and smarter, thereby facilitating the development of such devices towards miniaturization and meeting the diversified needs of the market.

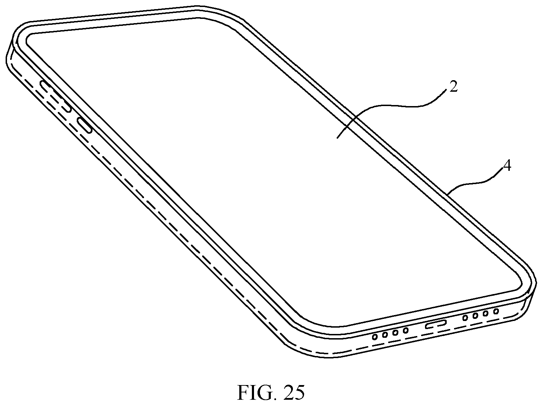

As shown in FIG. 25, in other embodiments, a protective casing 4 may also be configured for the mobile phone 2. When the protective casing 4 is configured, the magnetic attraction structure of the mobile phone 2 can be disposed on both the main body of the mobile phone 2 and the protective casing 4. Alternatively, identical magnetic attraction structures can be disposed on both the main body and the protective casing 4 of the mobile phone 2, and are used in combination, which can further enhance the magnetism.

The magnetic attraction structure of the protective casing 4 is basically the same as the magnetic attraction structure of the foregoing mobile phone 2, and is not repeatedly described again herein, which can be referred to in the foregoing text.

The magnet in this application can be a permanent magnet that can maintain magnetism for a long time, including but not limited to, neodymium iron boron (Nd2Fe14B), samarium cobalt (SmCo), aluminum nickel cobalt (AlNiCo), ferrite permanent magnet material (Ferrite), and the like. Moreover, the "annular" of the first annular magnet and the second annular magnet can be either a circumferentially closed ring or a ring with a notch that is disconnected in a circumferential direction.

The wireless charging base 1, the mobile phone 2, and the headphone casing 3 in the foregoing embodiments can be combined, to form a wireless charging system. Because the wireless charging base 1, the mobile phone 2, and the headphone casing 3 have been described in detail above, and in fact, the wireless charging system has been explained together, which is equivalent to providing an embodiment of a wireless charging system. To save space, repeated description of the wireless charging system is not provided, and details can be referred to in the foregoing text.

It should be noted herein that, although this application protects the wireless charging system, it does not exclude the addition of a wired charging function based on wireless charging. In other words, wired charging interfaces can be designed on the mobile phone 2 as the primary electronic device and the headphone casing 3 as the secondary electronic device.

The foregoing embodiments are only preferred solutions of this application, and the details are not limited thereto. On this basis, targeted adjustments can be made according to actual needs to obtain different implementations. For example, the wireless charging base 1 may have different shapes. In addition to circles, the wireless charging base 1 can also be square, rectangular, polygonal, or even irregular. In addition to the base form on a flat surface which is convenient for placement, the wireless charging base 1 may also be designed in a support form in various shapes, for example, a mobile phone holder that can be connected to an air outlet of an automobile air conditioner, and the like, thereby further expanding the application space and scope, and so on. Because there are many possible implementations, examples are not provided one by one here.

The electronic device provided in the embodiments of this application, in addition to the mobile phone, may specifically be a laptop, a wearable device, an onboard device, an augmented reality (augmented reality, AR) device/a virtual reality (virtual reality, VR) device, a notebook computer, an ultra-mobile personal computer (ultra-mobile personal computer, UMPC), a netbook, a personal digital assistant (personal digital assistant, PDA) or the like. For other structures of these electronic devices, reference may be made to the prior art, and details are not described herein again.

The wireless charging apparatus, the electronic device, and the electronic device protective casing provided in the embodiments of this application are described in detail above. The principle and implementations of this application are described herein through specific examples. The descriptions of the foregoing embodiments are merely configured for helping understand the method and core ideas of this application. It should be noted that a person of ordinary skill in the art may further make several improvements and modifications to this application without departing from the principle of this application. These improvements and modifications also fall within the protection scope of the claims of this application.

## Claims

1. A wireless charging apparatus, comprising a wireless charging coil and a magnetic attraction structure for alignment during charging, wherein the magnetic attraction structure comprises an annular magnet located on peripheries of the wireless charging coil and a central magnet located at a center of the wireless charging coil, wherein the annular magnet is configured for attraction and alignment with a primary electronic device, the central magnet is configured for attraction and alignment with a secondary electronic device, and a magnetic attraction surface formed by the central magnet is configured to repel a corresponding magnetic attraction surface on the primary electronic device.

2. The wireless charging apparatus according to claim 1, wherein the central magnet is a combination type magnet, comprising a center-of-circle magnet and peripheral magnets, wherein on a cross-section along a diameter direction, magnetic pole directions of peripheral magnets located on both sides of the center-of-circle magnet are consistent with the diameter direction and polarities thereof are opposite to each other, and a magnetic pole direction of the center-of-circle magnet is perpendicular to the magnetic pole directions of the peripheral magnets on both sides; a polarity of one pole of the center-of-circle magnet is the same as those of two poles of the peripheral magnets on both sides and facing a center of circle, to form a magnetic field strengthened surface, and a polarity of the other pole of the center-of-circle magnet is opposite to those of the two poles of the peripheral magnets on both sides and facing the center of circle, to form a magnetic field weakened surface; and the magnetic field strengthened surface faces outward, and the magnetic field weakened surface faces inward.

3. The wireless charging apparatus according to claim 1, wherein the annular magnet is a combination type magnet, comprising an inner ring magnet, a middle ring magnet, and an outer ring magnet, wherein on a cross-section along a radius direction, magnetic pole directions of the inner ring magnet and the outer ring magnet are consistent with the radius direction and polarities thereof are opposite to each other, and a magnetic pole direction of the middle ring magnet is perpendicular to the magnetic pole directions of the inner ring magnet and the outer ring magnet; a polarity of one pole of the middle ring magnet is the same as those of two opposite poles of the inner ring magnet and the outer ring magnet, to form a magnetic field strengthened surface, and a polarity of the other pole of the middle ring magnet is opposite to those of the two opposite poles of the inner ring magnet and the outer ring magnet, to form a magnetic field weakened surface; and the magnetic field strengthened surface faces outward, and the magnetic field weakened surface faces inward.

4. The wireless charging apparatus according to claim 1, wherein the annular magnet is a combination type magnet, comprising an inner ring magnet and an outer ring magnet, wherein on a cross-section along a radius direction, a magnetic pole direction of the inner ring magnet is consistent with the radius direction, a magnetic pole direction of the outer ring magnet is perpendicular to the radius direction, and a polarity of the inner ring magnet away from a center of circle is the same as that of the outer ring magnet facing outward.

5. The wireless charging apparatus according to claim 1, wherein the annular magnet is a combination type magnet, comprising an inner ring magnet, a middle ring magnet, and an outer ring magnet, wherein on a cross-section along a radius direction, magnetic pole directions of the inner ring magnet and the outer ring magnet are perpendicular to the radius direction and polarities thereof are opposite to each other, and a magnetic pole direction of the middle ring magnet is consistent with the radius direction; and a polarity of one pole of the middle ring magnet away from a center of circle is the same as that of a pole of the outer ring magnet facing outward, to form a magnetic field strengthened surface, and a polarity of the other pole of the middle ring magnet is the same as that of a pole of the inner ring magnet facing outward, to form a second magnetic field strengthened surface, and a polarity of the first magnetic field strengthened surface is opposite to that of the second magnetic field strengthened surface.

6. The wireless charging apparatus according to claim 5, wherein a polarity of an equivalent magnetic pole of the central magnet facing outward is opposite to that of a pole of the inner ring magnet facing outward.

7. An electronic device, comprising a wireless charging coil and a magnetic attraction structure for attraction and alignment during charging, wherein the magnetic attraction structure comprises an annular magnet located on peripheries of the wireless charging coil and a central magnet located at a center of the wireless charging coil; and the annular magnet is configured for attraction and alignment with the wireless charging apparatus, the central magnet is configured for attraction and alignment with a secondary electronic device capable of being charged reversely, and a magnetic attraction surface formed by the central magnet is configured to repel a corresponding magnetic attraction surface on the wireless charging apparatus.

8. The electronic device according to claim 7, wherein the central magnet is a combination type magnet, comprising a center-of-circle magnet and peripheral magnets, wherein on a cross-section along a diameter direction, magnetic pole directions of peripheral magnets located on both sides of the center-of-circle magnet are consistent with the diameter direction and polarities thereof are opposite to each other, and a magnetic pole direction of the center-of-circle magnet is perpendicular to the magnetic pole directions of the peripheral magnets on both sides; a polarity of one pole of the center-of-circle magnet is the same as those of two poles of the peripheral magnets on both sides and facing a center of circle, to form a magnetic field strengthened surface, and a polarity of the other pole of the center-of-circle magnet is opposite to those of the two poles of the peripheral magnets on both sides and facing the center of circle, to form a magnetic field weakened surface; and the magnetic field strengthened surface faces outward, and the magnetic field weakened surface faces inward.

9. The electronic device according to claim 7, wherein the annular magnet is a combination type magnet, comprising an inner ring magnet, a middle ring magnet, and an outer ring magnet, wherein on a cross-section along a radius direction, magnetic pole directions of the inner ring magnet and the outer ring magnet are consistent with the radius direction and polarities thereof are opposite to each other, and a magnetic pole direction of the middle ring magnet is perpendicular to the magnetic pole directions of the inner ring magnet and the outer ring magnet; a polarity of one pole of the middle ring magnet is the same as those of two opposite poles of the inner ring magnet and the outer ring magnet, to form a magnetic field strengthened surface, and a polarity of the other pole of the middle ring magnet is opposite to those of the two opposite poles of the inner ring magnet and the outer ring magnet, to form a magnetic field weakened surface; and the magnetic field strengthened surface faces outward, and the magnetic field weakened surface faces inward.

10. The electronic device according to claim 7, wherein the annular magnet is a combination type magnet, comprising an inner ring magnet and an outer ring magnet, wherein on a cross-section along a radius direction, a magnetic pole direction of the inner ring magnet is consistent with the radius direction, a magnetic pole direction of the outer ring magnet is perpendicular to the radius direction, and a polarity of the inner ring magnet away from a center of circle is the same as that of the outer ring magnet facing outward.

11. The electronic device according to claim 7, wherein the annular magnet is a combination type magnet, comprising an inner ring magnet, a middle ring magnet, and an outer ring magnet, wherein on a cross-section along a radius direction, magnetic pole directions of the inner ring magnet and the outer ring magnet are perpendicular to the radius direction and polarities thereof are opposite to each other, and a magnetic pole direction of the middle ring magnet is consistent with the radius direction; and a polarity of one pole of the middle ring magnet away from a center of circle is the same as that of a pole of the outer ring magnet facing outward, to form a first magnetic field strengthened surface, and a polarity of the other pole of the middle ring magnet is the same as that of a pole of the inner ring magnet facing outward, to form a second magnetic field strengthened surface, and a polarity of the first magnetic field strengthened surface is opposite to that of the second magnetic field strengthened surface.

12. The electronic device according to claim 11, wherein a polarity of an equivalent magnetic pole of the central magnet facing outward is the same as that of a pole of the inner ring magnet facing outward.

13. An electronic device protective casing, attached to an electronic device, and provided with a magnetic attraction structure for attraction and alignment during charging of the electronic device, wherein the magnetic attraction structure comprises an annular magnet and a central magnet located at a center of the annular magnet; and the annular magnet is configured for attraction and alignment with the wireless charging apparatus, the central magnet is configured for attraction and alignment with a secondary electronic device capable of being charged reversely by the electronic device, and a magnetic attraction surface formed by the central magnet is configured to repel a corresponding magnetic attraction surface on the wireless charging apparatus.

14. The electronic device protective casing according to claim 13, wherein the central magnet is a combination type magnet, comprising a center-of-circle magnet and peripheral magnets, wherein on a cross-section along a diameter direction, magnetic pole directions of peripheral magnets located on both sides of the center-of-circle magnet are consistent with the diameter direction and polarities thereof are opposite to each other, and a magnetic pole direction of the center-of-circle magnet is perpendicular to the magnetic pole directions of the peripheral magnets on both sides; a polarity of one pole of the center-of-circle magnet is the same as those of two poles of the peripheral magnets on both sides and facing a center of circle, to form a magnetic field strengthened surface, and a polarity of the other pole of the center-of-circle magnet is opposite to those of the two poles of the peripheral magnets on both sides and facing the center of circle, to form a magnetic field weakened surface; and the magnetic field strengthened surface faces outward, and the magnetic field weakened surface faces inward.

15. The electronic device protective casing according to claim 13, wherein the annular magnet is a combination type magnet, comprising an inner ring magnet, a middle ring magnet, and an outer ring magnet, wherein on a cross-section along a radius direction, magnetic pole directions of the inner ring magnet and the outer ring magnet are consistent with the radius direction and polarities thereof are opposite to each other, and a magnetic pole direction of the middle ring magnet is perpendicular to the magnetic pole directions of the inner ring magnet and the outer ring magnet; a polarity of one pole of the middle ring magnet is the same as those of two opposite poles of the inner ring magnet and the outer ring magnet, to form a magnetic field strengthened surface, and a polarity of the other pole of the middle ring magnet is opposite to those of the two opposite poles of the inner ring magnet and the outer ring magnet, to form a magnetic field weakened surface; and the magnetic field strengthened surface faces outward, and the magnetic field weakened surface faces inward.

16. The electronic device protective casing according to claim 13, wherein the annular magnet is a combination type magnet, comprising an inner ring magnet and an outer ring magnet, wherein on a cross-section along a radius direction, a magnetic pole direction of the inner ring magnet is consistent with the radius direction, a magnetic pole direction of the outer ring magnet is perpendicular to the radius direction, and a polarity of the inner ring magnet away from a center of circle is the same as that of the outer ring magnet facing outward.

17. The electronic device protective casing according to claim 13, wherein the annular magnet is a combination type magnet, comprising an inner ring magnet, a middle ring magnet, and an outer ring magnet, wherein on a cross-section along a radius direction, magnetic pole directions of the inner ring magnet and the outer ring magnet are perpendicular to the radius direction and polarities thereof are opposite to each other, and a magnetic pole direction of the middle ring magnet is consistent with the radius direction; and a polarity of one pole of the middle ring magnet away from a center of circle is the same as that of a pole of the outer ring magnet facing outward, to form a first magnetic field strengthened surface, and a polarity of the other pole of the middle ring magnet is the same as that of a pole of the inner ring magnet facing outward, to form a second magnetic field strengthened surface, and a polarity of the first magnetic field strengthened surface is opposite to that of the second magnetic field strengthened surface.

18. The electronic device protective casing according to claim 17, wherein a polarity of an equivalent magnetic pole of the central magnet facing outward is the same as that of a pole of the inner ring magnet facing outward.
